Europäisches Patentamt

European Patent Office

Office européen des brevets

(1) Publication number: **0 095 259**
**B1**

(12) **EUROPEAN PATENT SPECIFICATION**

(45) Date of publication of patent specification: **25.02.87**

(51) Int. Cl.⁴: **C 09 K 7/00, E 21 B 33/138**

(21) Application number: **83302439.1**

(22) Date of filing: **29.04.83**

(54) **Fluid loss control additive for a well drilling fluid.**

(30) Priority: **03.05.82 US 374252**

(43) Date of publication of application:
**30.11.83 Bulletin 83/48**

(45) Publication of the grant of the patent:
**25.02.87 Bulletin 87/09**

(84) Designated Contracting States:
**BE DE FR GB IT NL**

(56) References cited:
**EP-A-0 007 815**
**US-A-4 183 406**

(73) Proprietor: **Exxon Research and Engineering Company**
**P.O.Box 390 180 Park Avenue**
**Florham Park New Jersey 07932 (US)**

(72) Inventor: **Peiffer, Dennis George**
**10 Churchill Road**
**East Brunswick New Jersey 08816 (US)**
Inventor: **Lundberg, Robert Dean**
**4 Brian Drive**
**Bridgewater New Jersey 08807 (US)**
Inventor: **Walker, Thad Oscar**
**1311 St. Andrew's**
**Humble Texas 77339 (US)**

(74) Representative: **Field, Roger Norton et al**
**ESSO Engineering (Europe) Ltd. Patents & Licences Apex Tower High Street**
**New Malden Surrey KT3 4DJ (GB)**

The file contains technical information submitted after the application was filed and not included in this specification

## Description

The present invention relates to a process for the plugging of a porous formation.

The process entails plugging of the porous formation which may be encountered during the drilling of a well by means of a polymeric solution containing pseudo-emulsion spheres. These particles penetrate the pore structure within a formation. Eventually, sufficient numbers of the spheres will accumulate within the pores, blocking further flow through the formation by both the pseudo-emulsion particles and any aqueous solutions. The pseudo-emulsion system is formed by mixing a polymer solution containing low levels of polymer with an aqueous solution. In particular, the pseudo-emulsion system is formed by a process which comprises the steps of forming a solvent system of an organic liquid and a polar cosolvent, the polar cosolvent being less than 15 weight percent of the solvent system, the viscosity of the solvent system being less than 1000 mPas preferably less than 100 mPas; dissolving a water insoluble neutralised sulphonated polymer in the cosolvent system to form a solution, the concentration of the neutralised sulphonated polymer in the solution being at least 0.01 and less than 0.5 weight percent, the viscosity of the solution being less than 200 mPas. The solution is admixed or contacted with 5 to 500 volume percent water, the water being immiscible with the organic liquid and with the polar cosolvent wherein the neutralised sulphonated polymer transfers from the organic liquid to the water phase, thereby causing the water phase to gel (i.e. thicken). Upon injection of the solution of the polymer, organic liquid and polar cosolvent into the well this solution penetrates into the pores of the porous formations in the well. Upon contact of the water with the solution e.g. within the porous formation in the well, gelation of the water occurs, thereby plugging the porous formation of the well.

The gelled aqueous phase (containing the pseudo-emulsion particles) having a viscosity greater than 50 mPas is formed by contacting the water insoluble solution having a viscosity less than 200 mPas with water wherein the water insoluble solution comprises an organic liquid, a polar cosolvent and a neutralised sulphonated polymer and the concentration of neutralised sulphonated polymer in the water insoluble solution is at least 0.01 and less than 0.5 weight percent. Upon contacting the water insoluble solution with water, the polar cosolvent and water insoluble, neutralised sulphonated polymer rapidly transfer from the organic liquid to the aqueous water which undergoes immediate gelation. The gelation (i.e. thickening) of the water to a viscosity of at least 50 mPas can be quite rapid of the order of 1 minute to 24 hours, more preferably 1 minute to 30 minutes, and most preferably 1 minute to 10 minutes; however, this depends on temperature, shear, solvent type, etc. The formed pseudo-emulsion system readily and rapidly plugs the pores of the porous formation in the well.

The component materials of the present process include a water insoluble, neutralized sulfonated polymer at a critical concentration level of at least 0.01 and less than 0.5 weight percent in solvent, a nonpolar organic liquid, a polar cosolvent and water containing in specific instances, an acid or a salt.

Gelation of an aqueous phase does not occur, if one employs a conventional unsulfonated polymer or a water soluble, neutralized sulfonated polymer in place of the water insoluble, neutralized sulfonated polymer, but rather only classical phase separation occurs.

In the present invention, the gelation of the aqueous phase occurs by the formation of geometrically shaped spheres of the water insoluble, neutralized sulfonated polymer within the aqueous phase, wherein the water is encapsulated within these geometrically shaped spheres. During the process, approximately 10 weight percent of the nonpolar organic liquid also transfers to the aqueous phase and is encapsulated within these geometrically shaped spheres.

The sulfonated polystyrenes which are the preferred embodiment of this invention lose their effectiveness (i.e., as a water-in-water pseudo-emulsion former) in salt water. More specifically, it has been found that a suitable nonionic surfactant must be employed with the water insoluble, sulfonated polystyrene to give formulations which are effective in producing these water-in-water pseudo-emulsions in high concentrations of salt water.

In general, the water insoluble ionomeric (sulphonated) polymer will comprise from 10 to 200 meq. pendant ionomeric groups per 100 grams of polymer, more preferably from 10 to 100 meq. pendant ionomeric groups. In most instances, the ionomers utilised in the present invention are neutralised with the basic materials selected from Groups IA, IIA, IB and IIB of the Periodic Table of Elements and lead, tin and antimony, as well as ammonium and amine counterions. Ionic polymers which are used in the process of the present invention are illimitable and include both plastic and elastomeric polymers. Specific polymers include sulphonated polystyrene, sulphonated poly t-butyl styrene, sulphonated polyethylene (substantially non-crystalline), sulphonated ethylene copolymers, polypropylene (substantially non-crystalline), sulphonated propylene copolymers, sulphonated styrene/acrylonitrile copolymers, sulphonated polyvinyl toluene, sulphonated polyvinyl toluene copolymers, sulphonated styrene/methyl methacrylate copolymers, sulphonated block copolymers of styrene/ethylene oxide, sulphonated polyisobutylene, sulphonated ethylene-propylene terpolymers, sulphonated polyisoprene and sulphonated elastomers and their copolymers. The preferred polymers of the present invention are ethylene-propylene terpolymers (EPDM) and polystyrene, wherein polystyrene is most preferred.

Neutralisation of the cited polymers with appropriate metal hydroxides, metal acetates, metal oxides, or ammonium hydroxide etc. can be conducted by means well-known in the art. For example, the sulphonation process as with Butyl rubber containing a small 0.3 to 1.0 mole percent unsaturation can be conducted in a suitable solvent such as toluene, with acetyl sulphate as the sulphonating agent, such as described in US Patent 3,836,511. The resulting sulphonic acid derivative can then be neutralised with a number of different neutralisation agents such as a sodium phenolate and similar metal salts. The amounts of such neutralisation agents employed will normally be equal stoichiometrically to the amount of free acid in the polymer plus any unreacted agent which is still present. It is preferred that the amount of neutralizing agent be equal to the molar amount of sulfonating agent originally employed plus 10 percent more to ensure full neutralization. The use of more of such neutralization agent is not critical. Sufficient neutralization agent is necessary to effect at least 50 percent neutralization of the sulfonic acid groups present in the polymer, preferably at least 90 percent, and most preferably essentially complete neutralization of such acid groups should be effected.

The degree of neutralization of said ionomeric groups may vary from more than zero (free acid) to greater than 100 mole percent, preferably 50 to 100 percent. With the utilization of neutralized ionomers in this present invention, it is preferred that the degree of neutralization be substantially complete, that is with no substantial free acid present and without substantial excess of the base other than that needed to ensure neutralization. The neutralized ionomers possess greater thermal stability compared to its acid form. Thus, it is clear that the polymers which are normally utilized in the present invention comprise substantially neutralized pendant groups, and in fact, an excess of the neutralizing material may be utilized without defeating the objects of the present invention.

The ionomeric polymers of the present invention may vary in number average molecular weight from 1,000 to 10,000,000 preferably from 5,000 to 500,000, most preferably from 10,000 to 200,000. These polymers may be prepared by methods known in the art, for example, see U.S. Patent 3,642,728.

The preferred ionic copolymers for use in the present invention, e.g., sulfonated polystyrene and substituted derivatives thereof, may be prepared by the procedures described in U.S. Patent 3,870,841, filed October 2, 1972, in the names of H. S. Makowski, R. D. Lundberg and G. H. Singhal.

The ionic polymers are incorporated into the solvent system at a level of at least 0.01 but less than 0.5 weight percent and more preferably from 0.01 to 0.4 weight percent, based on the organic liquid and the polar cosolvent.

The sulphonated polymers of the present invention may be prepared prior to incorporation into the organic solvent, or by neutralization of the acid form in situ. Thus, the acid derivative may be neutralized immediately after preparation. For example, if the sulfonation of polystyrene is conducted in solution, then the neutralization of that acid derivative can be conducted immediately following the sulfonation procedure. The neutralized polymer may then be isolated by means well-known to those skilled in the art, i.e., coagulation, steam stripping, or solvent evaporation, because the neutralized polymer has sufficient thermal stability to be dried for employment at a later time in the process of the present invention. It is well-known that the unneutralized sulfonic acid derivatives do not possess good thermal stability and the above operations avoid that problem.

It is also possible to neutralize the acid form of these polymers in situ; however, this is not a preferred operation, since in situ neutralization requires preparation of the sulfonic acid in the organic liquid which is to be subjected to the present process, or the acid form of the ionic polymer must be dissolved in said organic liquid. The latter approach may involve handling of an acid form of an ionic polymer which has limited thermal stability. Therefore, it is quite apparent that the preparation and isolation of a neutralized ionic polymer affords the maximum latitude in formulation, less problems in handling polymers of limited thermal stability and maximum control over the final mixture of ionic polymer, polar cosolvent and organic liquid.

The organic liquids, which may be utilized in the present invention, are selected with relation to the ionic polymer and vice-versa. The organic liquid may be selected from aromatic hydrocarbons, cyclic aliphatic ethers, aliphatic ethers, organic aliphatic esters and mixtures thereof.

Specific examples of organic liquids to be employed with the various types of polymers are:

| Polymer | Organic liquid |
|---|---|
| sulfonated polystyrene | benzene, toluene, ethyl benzene, methylethyl ketone, xylene, styrene, ethylene, dichloride, methylene chloride. |
| sulfonated poly-t-butyl-styrene | benzene, toluene, xylene, ethyl benzene, styrene, t-butyl styrene, aliphatic oils, aromatic oils, hexane, heptane, decane, nonane. |
| sulfonated ethylene-propylene terpolymer | pentane, aliphatic and aromatic solvents, oils such as Solvent "100 Neutral", "150 Neutral" and similar oils, benzene, diesel oil, toluene, xylene, ethyl benzene, pentane, hexane, heptane, octane, isooctane, nonane, decane aromatic solvents, ketone solvents. |
| sulfonated styrene-methyl-methacrylate copolymer | dioxane, halogenated aliphatics, e.g., methylene chloride, tetrahydrofuran. |
| sulfonated polyisobutylene | saturated aliphatic hydrocarbons, diisobutylene, triisobutylene, aromatic and alkyl substituted aromatic hydrocarbons, chlorinated hydrocarbons, n-butyl ether, n-amyl, ether, methyl oleate, aliphatic oils, oils predominantly paraffinic in nature and mixtures containing naphthenic hydrocarbons. "Solvent 100 Neutral", "Solvent 150 Neutral" and all related oils, low molecular weight polymeric oils such as squalene, white oils and process oils having 60 percent or less aromatic content. |
| sulphonated polyvinyl toluene | toluene, benzene, xylene, cyclohexane ethyl benzene, styrene, methylene chloride, ethylene dichloride. |

The method of the present invention includes incorporating a polar cosolvent, for example, a polar cosolvent in the mixture of organic liquid and water insoluble ionomer to solubilise the pendant ionomeric groups. The polar cosolvent will preferably have a solubility parameter of at least 10.0, more preferably at least 11.0 and is water miscible and may comprise from 0.1 to 10.0 weight percent, preferably 0.1 to 5.0 weight percent of the total mixture of organic liquid, ionomeric polymer, and polar cosolvent. The solvent system of polar cosolvent and organic liquid in which the neutralised sulphonated polymer is dissolved preferably contains less than about 10.0 weight percent of the polar cosolvent, more preferably 0.1 to 5.0 weight percent, and most preferably 1.0 to 5.0 weight percent. The viscosity of the solvent system is less than 1,000 mPas, more preferably less than 800 and most preferably less than 500 mPas e.g. less than 100 mPas.

Normally, the polar cosolvent will be a liquid at room temperature; however, this is not essential. It is preferred, but not required, that the polar cosolvent be soluble or miscible with the organic liquid at the levels employed in this invention. Also it is preferred that the polar solvent has a greater polarity than the organic liquid. The polar cosolvent may be selected from water-soluble alcohols, including di- or trifunctional alcohols, amides, amines, acetamides, phosphates, lactone and mixtures thereof. Especially preferred polar cosolvents are aliphatic alcohols such as methanol, ethanol, n-propanol, isopropanol, 1,2-propane diol, monoethyl ether of ethylene glycol, and n-ethylformamide.

The amount of water contacted with the solution of neutralized sulfonated polymer, organic liquid and polar cosolvent having a viscosity of less than 200 mPas, is 5 to 500 volume percent of water, more preferably 10 to 300 volume percent water, most preferably 10 to 200 volume percent water.

Example 1

Aqueous solutions containing pseudo-emulsion spheres based on sulphonated polystyrene were tested as a fluid loss additive using Millipore[R] filters (Millipore Corporation—Bedford, Massachusetts) possessing a range of pore sizes (0.2, 1.0 and 5.0 μm). This test is based on the ability of an aqueous solution containing a large number of pseudo-emulsion spheres to completely prevent the aqueous phase from percolating through the filter. In this example, 20 ml of a pseudo-emulsion system is placed in a funnel containng the appropriate filter. The maximum amount of fluid which can pass through (prior to any plugging) is measured. We observe only a small volume of fluid ($\leq$0.5 ml) passed through the 0.2 μm and 1.0 μm filters, while less than 1 ml of solution came through the 5 μm filter. However, complete plugging of the filter occurs in all instances.

This example shows that pseudo-emulsion spheres are capable of plugging the pores within a filter which, in turn, completely inhibits flow of the aqueous phase. The filter pore sizes are comparable to pore sizes found in a variety of underground formations.

Moreover, we observe that the aqueous solution (without pseudo-emulsion spheres) passes rapidly and uninhibitedly through the filter paper, regardless of pore size.

**Claims**

1. A process for plugging the pores of a porous formation of a well with an aqueous pseudo-emulsion system having a viscosity of at least 50 mPas which comprises:

(a) forming a solvent system of an organic liquid and a polar cosolvent, said polar cosolvent being less than 15 weight percent of said solvent system, the viscosity of said solvent system being less than 1000 mPas;

(b) dissolving a water insoluble, neutralised sulphonated polymer in said solvent system to form a solution, the concentration of said neutralised sulphonated polymer in said solution being at least 0.01 and less than 0.5 weight percent, the viscosity of said solution being less than 200 mPas and wherein;

(c) said solution is contacted with 5 to 500 volume percent of water, the water being immiscible with said solution and with said polar cosolvent wherein said water insoluble, neutralised sulphonated polymer transfers from the organic liquid phase to said water causing the viscosity of the water to increase to at least 50 mPas;

(d) said solution is injected into said well having said porous formation;

(e) water contained in said porous formation of said well contacts said pseudo-emulsion solution; and

(f) penetration of the pores of said porous formation by the pseudo-emulsion particles leads to plugging of the pores of said porous formation of said well.

2. A process according to Claim 1 which includes means for removing said organic liquid from said aqueous fluid.

3. A process according to either of Claims 1 and 2 wherein said neutralised sulphonated polymer has about 10 (free acid) to about 200 meq. of pendant $SO_3H$ groups per 100 grams of polymer.

4. A process according to any one of the preceding claims wherein said metal counterion is selected from antimony, tin, lead and Groups IA, IIA, IB or IIB of the Periodic Table of Elements.

5. A process according to any one of the preceding claims wherein said polar cosolvent has a greater polarity than said organic liquid.

6. A process according to any one of the preceding claims wherein said polar cosolvent is selected from aliphatic amines, mono-, di- or tri functional aliphatic alcohols, water miscible amides, acetamides, phosphates, lactones and mixtures thereof.

7. A process according to any one of the preceding claims wherein said organic liquid is selected from aromatic hydrocarbons, ketones, chlorinated aliphatic hydrocarbons, aliphatic hydrocarbons, cyclic aliphatic ethers, aliphatic ethers, organic aliphatic esters and mixtures thereof.

8. A process according to any one of the preceding claims wherein said neutralised sulphonated polymer is formed from polystyrene.

9. A process according to any one of Claims 1 to 7 wherein said neutralised sulphonated polymer is formed from an EPDM terpolymer.

10. A process according to any one of the preceding claims wherein the polar cosolvent has a solubility parameter of at least 10.0.

**Patentansprüche**

1. Verfahren zum Verstopfen der Poren einer porösen Formation einer Bohrung mit einem wässrigen Pseudoemulsionssystem mit einer Viskosität von mindestens 50 mPas, bei dem

(a) ein Lösungsmittelsystem aus einer organischen Flüssigkeit und einem polaren Colösungsmittel gebildet wird, wobei das polare Colösungsmittel weniger als 15 Gew.% des Lösungsmittelsystems ausmacht und die Viskosität des Lösungsmittelsystems weniger als 1000 mPas beträgt, und

(b) ein wasserunlösliches, neutralisiertes, sulfoniertes Polymer in dem Lösungsmittelsystem unter Bildung einer Lösung aufgelöst wird, wobei die Konzentration des neutralisierten sulfonierten Polymeren in der Lösung mindestens 0,01 und weniger als 0,5 Gew.% beträgt und die Viskosität der Lösung weniger als 200 mPas beträgt, dadurch gekennzeichnet, daß

(c) die Lösung mit 5 bis 500 Vol% Wasser kontaktiert wird, wobei das Wasser mit der Lösung und mit dem polaren Colösungsmittel nicht mischbar ist und das wasserunlösliche, neutralisierte, sulfonierte Polymer aus der organischen Flüssigkeitsphase in das Wasser übergeht und bewirkt, daß sich die Viskosität des Wassers auf mindestens 50 Mpas erhöht,

(d) die Lösung in die Bohrung der porösen Formation injiziert wird,

(e) in der porösen Formation der Bohrung enthaltenes Wasser die Pseudoemulsionslösung kontaktiert und

(f) die Penetration der Poren der porösen Formation durch die Pseudoemulsionsteilchen zum Verstopfen der Poren der porösen Formation der Bohrung führt.

2. Verfahren nach Anspruch 1, das Mittel zu Entfernung der organischen Flüssigkeit von dem wässrigen Fluid umfaßt.

3. Verfahren nach Anspruch 1 oder 2, dadurch gekennzeichnet, daß das neutralisierte sulfonierte Polymer etwa 10 (freie Säure) bis etwa 200 Milliäquivalente seitlicher $SO_3H$-Gruppen je 100 g Polymer besitzt.

4. Verfahren nach einem der vorangehenden Ansprüche, dadurch gekennzeichnet, daß das Metallgegenion ausgewählt ist aus Antimon, Zinn, Blei und den Gruppen IA, IIA, IB oder IIB des Periodischen Systems der Elemente.

5. Verfahren nach einem der vorangehenden Ansprüche, dadurch gekennzeichnet, daß das polare Colösungsmittel eine größere Polarität als die organische Flüssigkeit besitzt.

6. Verfahren nach einem der vorangehenden Ansprüche, dadurch gekennzeichnet, daß das polare Colösungsmittel ausgewählt ist aus aliphatischen Aminen, mono-, di- oder trifunktionellen aliphatischen Alkoholen, wassermischbaren Amiden, Acetamiden, Phosphaten, Lactonen und Mischungen derselben.

7. Verfahren nach einem der vorangehenden Ansprüche, dadurch gekennzeichnet, daß die organische Flüssigkeit ausgewählt ist aus aromatischen Kohlenwasserstoffen, Ketonen, chlorierten aliphatischen Kohlenwasserstoffen, aliphatischen Kohlenwasserstoffen, cyclischen aliphatischen Ethern, aliphatischen Ethern, organischen aliphatischen Estern und Mischungen derselben.

8. Verfahren nach einem der vorangehenden Ansprüche, dadurch gekennzeichnet, daß das neutralisierte sulfonierte Polymer aus Polystyrol gebildet worden ist.

9. Verfahren nach einem der Ansprüche 1 bis 7, dadurch gekennzeichnet, daß das neutralisierte sulfonierte Polymer aus einem EPDM-Terpolymer gebildet worden ist.

10. Verfahren nach einem der vorangehenden Ansprüche, dadurch gekennzeichnet, daß das polare Colösungsmittel einen Löslichkeitsparameter von mindestens 10,0 besitzt.

**Revendications**

1. Procédé pour l'obturation des pores d'une formation poreuse d'un puits avec un système de pseudo-émulsion aqueuse ayant une viscosité d'au moins 50 mPa.s, qui consiste

a) à former un système solvant à base d'un liquide organique et d'un cosolvant polaire, ledit cosolvant polaire representant moins de 15 pourcent en poids du système solvant et la viscosité dudit système solvant étant inférieure à 1000 mPa.s;

b) à dissoudre un polymére sulfoné, neutralisé, insoluble dans l'eau dans ledit système solvant pour former une solution, la concentration du polymère sulfoné neutralisé dans ladite solution étant d'au moins 0,01 et de moins de 0,5 pourcent en poids et la viscosité de ladite solution étant inférieure à 200 mPa.s et dans lequel

c) ladite solution est mise en contact avec 5 à 500 pourcent en volume d'eau, l'eau étant non miscible avec ladite solution et ledit cosolvant polaire, moyennant quoi le polymère sulfoné, neutralisé, insoluble dans l'eau passe de la phase liquide organique dans l'eau en provoquant une augmentation de la viscosité de l'eau jusqu'à au moins 50 mPa.s;

d) ladite solution est injectée dans le puits comportant ladite formation poreuse;

e) l'eau contenue dans cette formation poreuse du puits entre en contact avec ladite solution de pseudo-émulsion et

f) la pénétration des particules en pseudo-émulsion dans les pores de ladite formation poreuse entraîne le colmatage des pores de la formation poreuse dudit puits.

2. Procédé selon la revendication 1, qui comprend un moyen pour éliminer le liquide organique dudit fluide aqueux.

3. Procédé selon l'une et l'autre des revendications 1 et 2, dans lequel le polymère sulfoné neutralisé posséde environ 10 (acide libre) à environ 200 méq. de groupes $SO_3H$ pendants pour 100 grammes de polymère.

4. Procédé selon l'une quelconque des revendications précédentes, dans lequel le contre-ion métallique est choisi parmi l'antimoine, l'étain, le plomb et les groupes IA, IIA, IB ou IIB de la Classification Périodique des Eléments.

5. Procédé selon l'une quelconque des revendications précédentes, dans lequel le cosolvant polaire possède une polarité plus grande que le liquide organique.

6. Procédé selon l'une quelconque des revendications précédentes, dans lequel le cosolvant polaire est choisi parmi des amines aliphatiques, des alcools aliphatiques mono-, di- ou trifonctionnels, des amides miscibles à l'eau, des acétamides, des phosphates, des lactones et leurs mélanges.

7. Procédé selon l'une quelconque des revendications précédentes, dans lequel le liquide organique est choisi parmi des hydrocarbures aromatiques, des cétones, des hydrocarbures aliphatiques chlorés, des hydrocarbures aliphatiques, des éthers cycloaliphatiques, des éthers aliphatiques, des esters organiques aliphatiques et leurs mélanges.

8. Procédé selon l'une quelconque des revendications précédentes, dans lequel ledit polymère sulfoné neutralisé est obtenu à partir de polystyréne.

9. Procédé selon l'une quelconque des revendications 1 à 7, dans lequel ledit polymère sulfoné neutralisé est obtenu à partir d'un terpolymère d'EPDM.

10. Procédé selon l'une quelconque des revendications précédentes, dans lequel le cosolvant polaire possède un paramètre de solubilité d'au moins 10,0.